# EUROPÄISCHE PATENTANMELDUNG

(11) **EP 0 739 834 A2**
(43) Veröffentlichungstag der Anmeldung: **30.10.1996**
(21) Anmeldenummer: 96106475.5
(22) Anmeldetag: 24.04.1996
(51) Int. Cl.: B65G 47/244

(54) **Vorrichtung zum Verdrehen von in einem Förderprozess befindlichen Produkten**

(30) Priorität: 25.04.1995 DE 19515199
(71) Anmelder: ALPENLAND MASCHINENBAU HAIN & CO. KG, 83543 Rott am Inn (DE)
(72) Erfinder: Fischer, Franz, Dr., 83209 Prien (DE); Einlechner, Markus, 83043 Bad Aibling (DE)
(74) Vertreter: Finsterwald, Martin, Dr.

(57) **Zusammenfassung**

Vorrichtung zum Verdrehen von in einem Förderprozess befindlichen Produkten oder Produktstapeln um eine im wesentlichen senkrecht zur Förderebene verlaufende Achse, mit zwischen einer Zuführstrecke und einer Wegführstrecke umlaufenden, kammartig ausgebildeten Drehablagen, die von Antriebsmitteln zu deren während der Bewegung zwischen Zuführ- und Wegführstrecke erfolgenden Verdrehung aus einer Übernahme- in eine Abgabeposition beaufschlagt sind, wobei die Kammelemente der Drehablagen in der Abgabeposition in Förderrichtung ausgerichtet und in Eingriff mit in Förderrichtung verlaufenden Fingerbändern der Wegführstrecke bringbar sind, und im Bereich der Zuführstrecke die Fördergeschwindigkeit bzw. den Fördertakt der Drehablagen steuernde Mittel zur Detektion von zu verdrehenden und die Zuführstrecke passierenden Produkten bzw. Produktstapeln vorgesehen sind.

## Beschreibung

Die Erfindung betrifft eine Vorrichtung zum Verdrehen von in einem Förderprozess befindlichen Produkten oder Produktstapeln um eine im wesentlichen senkrecht zur Förderebene verlaufende Achse.

Derartige Vorrichtungen werden beispielsweise beim automatisierten Verpacken von im wesentlichen rechteckigen, übereinander gestapelten Lebensmittelprodukten, insbesondere Käsescheiben benötigt, um Produkte mit im Förderprozeß vorlaufender Längsseite in der Förderebene so zu verdrehen, daß anschließend die Querseite der Produkte vorausläuft. Im Anschluß an eine derartige Verdrehung können im nachfolgenden Verarbeitungsprozeß Fördermittel bzw. Produktablagen eingesetzt werden, deren Erstreckung quer zur Förderrichtung nicht der Längsseite sondern lediglich der im Verhältnis zur Längsseite kürzeren Querseite der Produkte entspricht, was zu einem wirtschaftlicheren Aufbau der Gesamtanordnung führt.

Es ist eine Aufgabe der Erfindung, eine Vorrichtung der eingangs angegebenen Art so auszubilden, daß sie problemlos in einen mit herkömmlichen Fördermitteln bewirkten Förderprozeß eingeschaltet und vollautomatisch betrieben werden kann und gleichzeitig eine sichere Führung der Produkte während des Verdrehens gewährleistet ist. Insbesondere soll im Rahmen der Erfindung ein Verdrehen der Produkte möglich sein, ohne daß auf die Produkte Kräfte, beispielsweise Reibkräfte ausgeübt werden, die das Produkt beschädigen bzw. einen Abrieb erzeugen. Zudem soll eine hohe Betriebsgeschwindigkeit der Vorrichtung möglich sein, so daß ein möglichst hoher Durchsatz an Produkten erzielbar ist.

Erfindungsgemäß wird deshalb vorgeschlagen, eine Vorrichtung der eingangs genannten Art mit zwischen einer Zuführstrecke und einer Wegführstrecke umlaufenden, kammartig ausgebildeten Drehablagen auszubilden, die von Antriebsmitteln zu deren während der Bewegung zwischen Zuführ- und Wegführstrecke erfolgenden Verdrehung aus einer Übernahme- in eine Abgabeposition beaufschlagt sind, wobei die Kammelemente der Drehablagen in der Abgabeposition in Förderrichtung ausgerichtet und in Eingriff mit in Förderrichtung verlaufenden Fingerbändern der Wegführstrecke bringbar sind, und im Bereich der Zuführstrecke die Fördergeschwindigkeit bzw. den Fördertakt der Drehablagen steuernde Mittel zur Detektion von zu verdrehenden und die Zuführstrecke passierenden Produkten bzw. Produktstapeln vorgesehen sind.

Erfindungsgemäß werden also die den normalen Förderprozeß bewirkenden Fördermittel in einem bestimmten Bereich der Förderstrecke unterbrochen und durch umlaufende Drehablagen ersetzt, wobei jeweils eine Drehablage zur Aufnahme eines Produktes bzw. eines Produktstapels und zur Verdrehung desselben ausgelegt ist. In diesem Bereich, in dem die herkömmlichen Fördermittel durch die umlaufenden Drehablagen ersetzt sind, übernehmen diese zusätzlich zur Funktion des Verdrehens auch eine Förderfunktion, was bedeutet, daß die sich im wesentlichen in der Förderebene erstreckenden Ablageflächen der Drehablagen nicht nur um eine im wesentlichen senkrecht zur Förderebene verlaufende Achse verdrehen sondern zusätzlich auch transversal in Förderrichtung transportiert werden, so daß der ablaufende Förderprozeß durch die Zwischenschaltung der erfindungsgemäßen Vorrichtung nicht unterbrochen wird.

Im Rahmen der Erfindung werden im Bereich der Zuführstrecke die Steuergeschwindigkeit bzw. den Fördertakt der drehablagensteuernde Mittel zur Detektion von zu verdrehenden und die Zuführstrecke passierenden Produkten bzw. Produktstapeln vorgesehen. Diese Mittel können beispielsweise als eine oder mehrere Lichtschranken ausgebildet sein. Sie dienen dazu, zu erkennen, wann über die Zuführstrecke ein Produkt bzw. ein Produktstapel angeliefert wird, so daß die Fördergeschwindigkeit der Drehablagen derart gesteuert werden kann, daß während der Zeit der Übergabe von Produkten bzw. Produktstapeln von der Zuführstrecke auf die Drehablagen die Fördergeschwindigkeiten von Zuführstrecke und Drehablage synchronisiert sind. Dies bedeutet, daß Zuführstrecke und Drehablagen sich während der Übergabe gleich schnell bewegen, so daß auf die übergebenen Produkte bzw. Produktstapel keine Abriebkräfte wirken, die bei aus dem Stand der Technik bekannten Vorrichtungen durch unterschiedliche Fördergeschwindigkeiten von Zuführstrecke und Drehablagen hervorgerufen werden. Erfindungsgemäß können die Produkte also auf vorteilhafte Weise ohne jeden Abrieb an die Drehablagen übergeben werden.

Die Synchronisation der Fördergeschwindigkeiten von Zuführstrecke und Drehablagen muß nur während des Zeitraums der Übergabe, gegebenenfalls für einen geringfügig längeren Zeitraum gegeben sein; zu Zeiten, zu denen keine Übergabe stattfindet, können die beiden Geschwindigkeiten voneinander abweichen. Das Abweichen der Geschwindigkeiten voneinander kann dann zwischen zwei Übergabezeitpunkten auf vorteilhafte Weise dazu ausgenutzt werden, die Geschwindigkeit der Drehablagen derart zu verzögern bzw. zu beschleunigen, daß genau dann, wenn über die Zuführstrecke ein weiteres Produkt angeliefert wird, sich eine Drehablage in der korrekten Position zur Aufnahme dieses Produktes befindet.

Da die Geschwindigkeit der Drehablagen somit zwischen der Übergabe von Produkten variabel ist, muß nicht gewährleistet sein, daß die Produkte über die Zuführstrecke in regelmäßigen Abständen angeliefert werden. Unregelmäßige Abstände können durch eine Veränderung der Geschwindigkeit der Drehablagen in den genannten Zeitintervallen ausgeglichen werden. Die gesamte Steuerung der Drehablagen kann dabei in Abhängigkeit von dem vorstehend genannten Mittel zur Detektion der über die Zuführstrecke angelieferten Produkte erfolgen, da es für die Steuerung ausreicht, zu wissen, wann ein Produkt im Bereich der Zuführstrecke eine bestimmte Position, nämlich zum Beispiel die Position des Detektionsmittels passiert.

Die Zuführstrecke wird vorzugsweise mit konstanter Geschwindigkeit betrieben, wobei es möglich ist, zwei unterschiedliche, jeweils konstante Geschwindigkeiten der Zuführstrecke vorzusehen, wobei die langsamere Geschwindigkeit dann eingestellt wird, wenn der Abstand der angelieferten Produkte so groß ist, daß zwischen der Zuführstrecke und der Wegführstrecke eine oder mehrere Drehablagen ohne ein aufgelegtes Produkt in Förderrichtung bewegt werden. Die Einstellung einer langsameren Geschwindigkeit in letztgenanntem Fall ist aus folgendem Grund vorteilhaft:

Wenn Produkte regelmäßig angeliefert werden, findet zwischen der Übergabe von zwei Produkten von der Zuführstrecke an die Drehablagen jeweils ein Synchronisationsprozeß statt, welcher vorzugsweise durch eine Verzögerung der Fördergeschwindigkeit der Drehablagen erreicht wird. Falls nun keine Produkte angeliefert werden, ist auch keine Synchronisation bzw. keine Verzögerung nötig, was dazu führt, daß sich die Drehablagen aufgrund der fehlenden Verzögerung mit einer höheren Geschwindigkeit bewegen. Dies könnte dazu führen, daß die noch auf den Drehablagen befindlichen Produkte mit zu hoher Geschwindigkeit abgegeben werden. Um dies zu vermeiden, wird die Geschwindigkeit der Zuführstrecke in der genannten Weise verlangsamt.

Die Zuführstrecke kann kontinuierlich oder im Taktbetrieb betrieben werden. Insbesondere ist auch ein Betrieb mit variablem Takt möglich.

Um sicherzustellen, daß auch bei der Abgabe der Produkte von den Drehablagen an die Wegführstrecke bzw. an die Fingerbänder kein Abrieb auftritt, können die Fördergeschwindigkeiten der Fingerbänder und der Drehablagen zumindest während der Übergabe eines Produktes bzw. Produktstapels von einer Drehablage an die Fingerbänder synchronisiert werden. Auf diese Weise werden die vorstehend genannten Vorteile auch bei der Abgabe der Produkte bzw. Produktstapel von den Drehablagen erreicht.

Vorzugsweise werden die Fingerbänder über das gleiche Antriebsmittel beaufschlagt wie die Drehablagen, so daß sichergestellt ist, daß die Fördergeschwindigkeit der Fingerbänder immer gleich der Fördergeschwindigkeit der Drehablagen ist.

Da sich an die Fingerbänder in Förderrichtung ein weiteres Fördermittel anschließt, sollte sichergestellt werden, daß auch die Übergabe an dieses weitere Fördermittel ohne Abrieb oder zumindest mit konstanter Geschwindigkeit erfolgt. Um dies zu erreichen, kann der Abstand zwischen dem den Drehablagen zugewandten Ende der Zuführstrecke und dem den Drehablagen abgewandten Ende der Fingerbänder zumindest im wesentlichen so gewählt werden, daß er einem ganzzahligen Vielfachen des Abstandes der Drehachsen zweier benachbarter Drehablagen entspricht. Bei einer derartigen Dimensionierung der Vorrichtung ist sichergestellt, daß immer dann, wenn ein Produkt von der Zuführstrecke an die Drehablagen übergeben wird, auch ein Produkt von den Fingerbändern an das weitere Fördermittel übergeben wird. Da die Drehablagen während dieses Übergabeprozesses immer mit der gleichen Geschwindigkeit laufen wie die Zuführstrecke und zugleich die Fördergeschwindigkeiten der Drehablagen und der Fingerbänder gleich groß sind, ist sichergestellt, daß die Fingerbänder zum Zeitpunkt der Abgabe eines Produktes an das weitere Fördermittel mit der gleichen Geschwindigkeit laufen wie die Zuführstrecke. Wenn die Zuführstrecke nun während der Übergabe mit konstanter Geschwindigkeit betrieben wird, ist sichergestellt, daß die Übergabe eines Produktes von den Fingerbändern an das weitere Fördermittel ebenfalls mit konstanter Geschwindigkeit erfolgt. Die Fördergeschwindigkeit des weiteren Fördermittels kann dann an diese bekannte konstante Geschwindigkeit angepaßt werden.

Anstelle der Steuerung der Geschwindigkeit der Drehablagen kann alternativ auch die Fördergeschwindigkeit der Zuführstrecke gesteuert werden. In diesem Fall können die Drehablagen mit konstanter Transportgeschwindigkeit betrieben werden. Gleiches gilt in diesem Fall für die Fingerbänder und das weitere Fördermittel.

Falls in einem bestimmten Anwendungsfall Produkte über gewisse Zeiträume mit gleichmäßigem Abstand voneinander über die Zuführstrecke antransportiert werden, kann die Regelung der Geschwindigkeit der Zuführstrecke in Abhängigkeit von dem genannten Abstand der Produkte voneinander gesteuert werden. In äquivalenter Weise wird in diesem Fall dann auch die Transportgeschwindigkeit der Drehablagen gesteuert, um auf diese Weise sicherzustellen, daß bei der Übergabe der Produkte von der Zuführstrecke auf die Drehablagen kein Wechsel der Fördergeschwindigkeit stattfindet.

Durch die genannten Synchronisationsprozesse hinsichtlich der drei stattfindenden Übergaben (Zuführstrecke - Drehablagen; Drehablagen - Fingerbänder; Fingerbänder - weiteres Fördermittel) wird neben der Vermeidung eines nachteiligen Abriebs auch noch erreicht, daß die Produkte keine nachteiligen Beschleunigungen während der Übergabeprozesse erfahren.

Die Übergabe der Produkte bzw. der Produktstapel kann entweder direkt zwischen den herkömmlichen, den normalen Förderprozeß bewirkenden Fördermitteln und den Drehablagen oder über eine zwischengeschaltete, speziell ausgebildete Zuführstrecke erfolgen. Ebenso kann die Abgabe der Produkte bzw. der Produktstapel von den Drehablagen an die den weiteren Förderprozeß bewirkenden Fördermittel entweder direkt oder über die Zwischenschaltung einer geeignet ausgebildeten Wegführstrecke erfolgen.

Die Übergabe der Produkte bzw. Produktstapel an die Drehablagen erfolgt im wesentlichen dadurch, daß die Drehablagen unterhalb des Endbereichs der als Zuführstrecke wirkenden Fördermittel in Förderrichtung vorbeibewegt werden, was bei entsprechend synchronisierten Fördergeschwindigkeiten der Zuführstrecke und der Drehablagen bewirkt, daß die Produkte bzw. Produktstapel von oben auf die Drehablagen abgelegt werden. Um während der Übergabe eine möglichst gute Führung der Produkte bzw. Produktstapel gewährleisten zu können, sollten die Förderebenen der Zuführstrecke und der Drehablagen in vertikaler Richtung einen möglichst geringen Abstand voneinander aufweisen. Eine besonders gute Führung ergibt sich dann, wenn die Zuführstrecke in deren Endbereich gegenüber der horizontalen Förderebene der Drehablagen nur geringfügig geneigt ist, so daß die Produkte bzw. Produktstapel unmittelbar vor der Übergabe leicht schräg nach unten in Richtung der Förderebene der Drehablagen transportiert werden. Noch vorteilhafter ist es, wenn der Endbereich der Zuführstrecke gegenüber der horizontalen Förderebene der Drehablagen überhaupt nicht geneigt ist, sondern in der gleichen Ebene verläuft wir die Förderebene der Drehablagen.

Um eine problemlose und sichere Abgabe der Produkte bzw. Produktstapel von den Drehablagen an die Wegführstrecke zu ermöglichen, sind die Drehablagen bzw. deren Ablageflächen kammartig ausgebildet, was bedeutet, daß die Ablageflächen durch eine Mehrzahl von parallel ausgerichteten länglichen Kammelementen gebildet sind, wobei zwischen benachbarten Kammelementen jeweils ein freier Zwischenraum vorhanden ist.

In der Abgabeposition bzw. im Bereich der Wegführstrecke sind die Drehablagen immer so orientiert, daß die länglichen Kammelemente in Förderrichtung verlaufen. In dieser Position können ebenfalls in Förderrichtung ausgerichtete Fingerbänder der Wegführstrecke in die zwischen den benachbarten Kammelementen ausgebildeten Zwischenräume eingreifen und die Produkte bzw. Produktstapel von den Drehablagen abheben. Die Fingerbänder übernehmen dabei zumindest über einen kurzen Bereich die weitere Förderfunktion.

Um ein Abheben der Produkte bzw. Produktstapel von den Drehablagen zu ermöglichen, muß die Förderebene der Fingerbänder entweder geringfügig über der Förderebene der Drehablagen angeordnet sein oder die Förderebenen der Drehablagen und der Fingerbänder müssen gegeneinander geringfügig geneigt werden, so daß die abgegebenen Produkte bzw. Produktstapel von den Fingerbändern schräg nach oben weggefördert werden.

Es sei an dieser Stelle nochmals erwähnt, daß Zu- und/oder Wegführstrecke entweder als speziell ausgebildeter Bestandteil der erfindungsgemäßen Vorrichtung oder als Bestandteil der herkömmlichen, den normalen Förderprozeß bewirkenden Fördermittel ausgebildet werden können. Es muß lediglich gewährleistet sein, daß der Anfangsbereich der Wegführstrecke Fingerbänder aufweist, die zum Eingriff in die Zwischenräume der Kammelemente der Drehablagen geeignet sind.

Die beschriebene Vorrichtung kann somit auf einfache Weise in einen Förderprozeß integriert werden, ohne diesen störend zu beeinflussen oder zu unterbrechen.

Von Vorteil ist insbesondere, daß während des Verdrehens der Produkte bzw. Produktstapel keine Relativbewegung zwischen der Auflagefläche der Drehablagen und den Produkten bzw. Produktstapeln auftritt, da die gesamte Auflagefläche gemeinsam mit den Produkten bzw. den Produktstapeln verdreht wird. Auf diese Weise wird einerseits eine sichere Führung der Produkte bzw. Produktstapel während des Verdrehens gewährleistet und andererseits ein durch Relativbewegungen zwischen Produkt und Auflagefläche bedingter Produktabrieb vermieden.

Bei einer bevorzugten Ausführungsform der Erfindung sind die Drehablagen mit einem umlaufenden Mitnahmeelement gekoppelt, welches um zwei horizontal voneinander beabstandete Umlenk- bzw. Antriebsrollen geführt ist. Das Mitnahmeelement kann dabei als Zahnriemen ausgebildet sein.

Besonders vorteilhaft ist es, wenn die Drehablagen mit dem Mitnahmeelement lösbar verbunden sind, so daß sie zum Zweck des Reinigens oder des Austauschs problemlos aus der Vorrichtung entnommen werden können. Auch das Mitnahmeelement selbst kann derart an den Umlenk- bzw. Antriebsrollen gehalten sein, daß es zum Zweck der Reinigung oder des Austauschs ohne Schwierigkeiten aus der Vorrichtung entnehmbar ist.

In der Regel wird mit der erfindungsgemäßen Vorrichtung eine Verdrehung der Produkte bzw. Produktstapel um 90° bewirkt. In diesem Fall verlaufen die Kammelemente der Drehablagen in der Übernahmeposition senkrecht zur Förderrichtung.

Es sind jedoch auch beliebige andere Verdrehwinkel möglich, wobei lediglich gewährleistet sein muß, daß die Kammelemente der Drehablagen in der Abgabeposition in Förderrichtung ausgerichtet sind bzw. parallel zur Förderrichtung verlaufen, so daß die Fingerbänder der Wegführstrecke in die zwischen den Kammelementen ausgebildeten Zwischenräume eingreifen können.

Weitere vorteilhafte Ausbildungsformen der Erfindung sind in den Unteransprüchen angegeben.

Die Erfindung wird nachfolgend anhand von Beispielen unter Bezugnahme auf die Zeichnung beschrieben; es zeigt:
- Figur 1: eine schematische Seitenansicht einer erfindungsgemäßen Vorrichtung,
- Figur 2: eine schematische Draufsicht auf eine erfindungsgemäße Vorrichtung, und
- Figur 3: Mittel zum Verdrehen der erfindungsgemäß vorgesehenen Drehablagen.

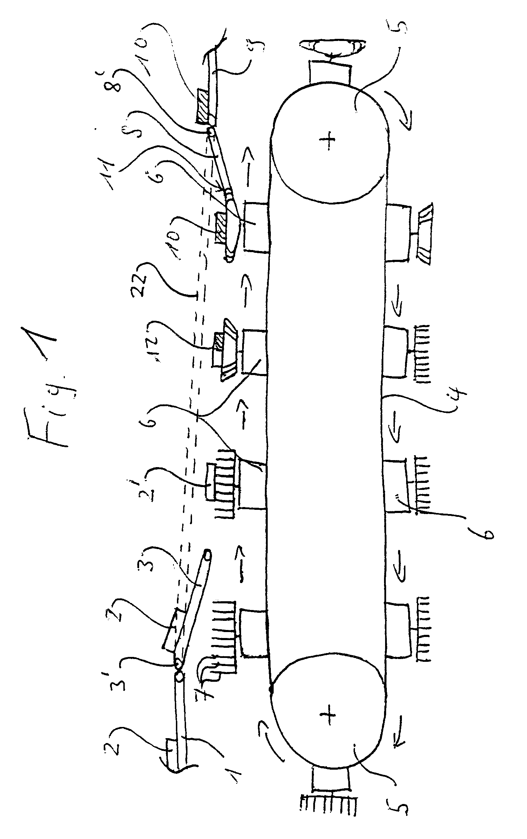

Figur 1 zeigt den Endbereich eines als herkömmliches Fördermittel ausgebildeten, den normalen Förderprozeß bewirkenden Förderbandes 1, welches zum Transport von Produkten 2 in einer horizontalen Förderebene geeignet ist.

Unmittelbar anschließend an diesen Endbereich des Förderbandes 1 schließt sich eine ebenfalls als Förderband ausgebildete Zuführstrecke 3 an, die geringfügig geneigt ist und die Produkte 2 bezogen auf die Förderebene des Förderbandes 1 schräg nach unten wegfördert.

Unterhalb der Zuführstrecke 3 ist ein beispielsweise als Zahnriemen ausgebildetes umlaufendes Mitnahmeelement 4 vorgesehen, welches um zwei beispielsweise gezahnte Umlenk- bzw. Anlenkrollen 5 geführt ist.

Das Mitnahmeelement 4 ist entlang seiner Umlaufrichtung mit äquidistant angeordneten Drehablagen 6 gekoppelt, welche jeweils Ablageflächen in Form von mehreren länglichen, sich parallel zueinander erstreckenden Kammelementen 7 aufweisen.

Die im Uhrzeigersinn angetriebenen Umlenk- bzw. Antriebsrollen 5 sind horizontal voneinander beabstandet, so daß die Drehablagen 6 sich zwischen den beiden Rollen 5 auf einer horizontalen Bahn - beim Ausführungsbeispiel gemäß Figur 1 von links nach rechts - bewegen.

Dabei sind die Rollen 5, das Mitnahmeelement 4 und die Drehablagen 6 relativ zur Zuführstrecke 3 so positioniert, daß die die Auflagefläche für die Produkte 2 bildenden Kammelemente 7 horizontal unmittelbar unterhalb des dem Förderband 1 abgewandten Endes der Zuführstrecke 3 vorbeilaufen.

Bei dem in Figur 1 gezeigten Beispiel ist die Zuführstrecke 3 gegenüber der Horizontalen geneigt, während die Drehablagen 6 in horizontaler Richtung unter der Zuführstrecke 3 vorbeilaufen. Alternativ wäre es auch möglich, die Zuführstrecke 3 horizontal anzuordnen und die Drehablagen 6 so zu führen, daß sie im Bereich des Endes der Zuführstrecke 3 auf einer schräg nach oben verlaufenden Bahn bewegt werden. Dies ist beispielsweise dadurch realisierbar, daß das Mitnahmeelement 4 über insgesamt vier Umlenk- bzw. Antriebsrollen geführt wird, so daß das Mitnahmeelement 4 von der Seite gesehen eine trapezförmige Bahn beschreibt, wobei die beiden parallelen Seiten dieses Trapezes horizontal verlaufen und die kürzere dieser beiden parallelen Seiten oben zu liegen kommt. Die Trapezbahn des Mitnahmeelements 4 würde in diesem Fall zwei schräg zur Horizontalen verlaufende Seiten aufweisen, von denen eine im Bereich des Zuführelements schräg nach oben und die andere im Bereich der Wegführstrecke schräg nach unten verlaufen würde. In diesem Fall könnte auch die Wegführstrecke 8 - anders als in Figur 1 dargestellt - horizontal verlaufend ausgebildet sein.

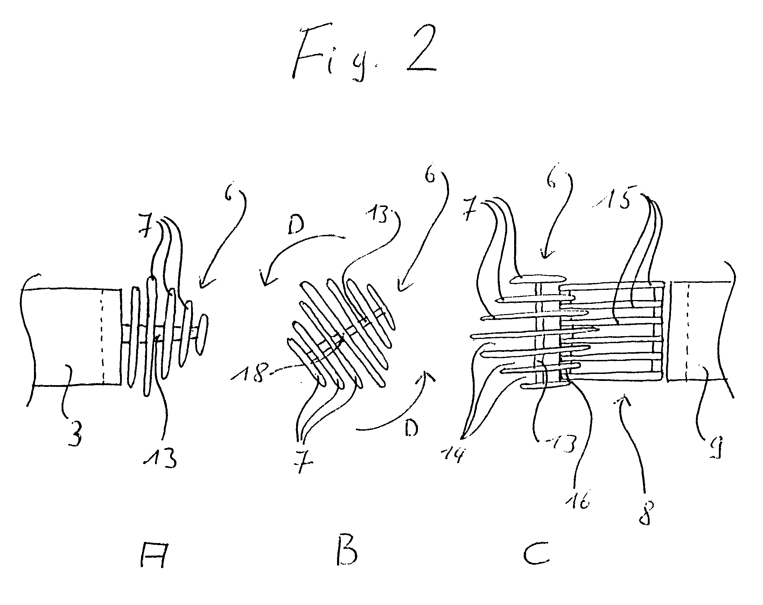

Horizontal beabstandet vom Ende der geneigten Zuführstrecke 3 gemäß Fig. 1 befindet sich auf selber Höhe das der Zuführstrecke 3 zugewandte Ende der Wegführstrecke 8. Die Wegführstrecke 8 ist in Form von mehreren, parallel voneinander beabstandeten und in Förderrichtung verlaufenden Fingerbändern ausgebildet (siehe Figur 2) und schließt mit ihrem der Zuführstrecke 3 abgewandten Ende an ein herkömmliches, beispielsweise als Förderband ausgebildetes Fördermittel 9 zum Abtransport der verdrehten Produkte 10 an. Die Förderebene des Fördermittels 9 ist dabei ebenso wie die Förderebene des Förderbandes 1 horizontal ausgerichtet.

Die Wegführstrecke 8 ist gegenüber der Förderebene des Fördermittels 9 schräg nach unten geneigt, so daß die Wegführstrecke 8 die verdrehten Produkte 10 von den Drehablagen 6 weg schräg nach oben in Richtung des Fördermittels 9 fördert.
Für ein problemloses Abheben und Wegführen der verdrehten Produkte 10 ist es dabei vorteilhaft, wenn sich die Förderebenen der Wegführstrecke 8 und der Drehablagen 6 bei 11 in einer senkrecht zur Zeichenebene der Figur 1 verlaufenden Achse schneiden.

Die in Figur 1 dargestellte Vorrichtung wird folgendermaßen betrieben:

Ein über das Förderband 1 und die Zuführstrecke 3 anfallendes Produkt bewirkt, daß die Umlenk- bzw. Antriebsrollen 5 in der Weise betrieben werden, daß sich eine Drehablage 6 in Pfeilrichtung synchron zu dem über die Zuführstrecke 3 transportierten Produkt 2 bewegt. Wenn das Produkt 2 das dem Förderband abgewandte Ende der Zuführstrecke 3 verläßt, wird es unter Schwerkrafteinwirkung auf der synchron bewegten Drehablage 6 abgelegt. Dabei ist dafür Sorge zu tragen, daß die Drehablage so angesteuert wird, daß das Produkt 2' vollständig auf der Drehablage 6 aufliegt und nicht etwa über deren Rand hinausragt.

Nachdem das Produkt 2' auf der ihm zugeordneten Drehablage 6 abgelegt wurde, wird diese horizontal in Richtung der Wegführstrecke 8 bewegt, wobei gleichzeitig eine Verdrehung der durch die Kammelemente 7 gebildeten Ablagefläche der Drehablage 6 erfolgt.

Das in Figur 1 zwischen der Zuführstrecke 3 und der Wegführstrecke 8 dargestellte Produkt 12 ist bereits um 45° verdreht, während das unmittelbar vor der Wegführstrecke 8 befindliche Produkt 10 bereits vollständig um 90° verdreht ist.

Entsprechend der 90°-Verdrehung der Produkte werden auch die Kammelemente 7 zwischen der Zuführstrecke 3 und der Wegführstrecke 8 um 90° verdreht, was in Figur 1 daran zu erkennen ist, daß die Kammelemente 7 im Bereich der Zuführstrecke 3 senkrecht zur Zeichenebene und im Bereich der Wegführstrecke 8 parallel zur Zeichenebene verlaufen.

Nachdem die Produkte vollständig verdreht worden sind, werden sie von den Fingerbändern der Wegführstrecke 8 von der Drehablage 6 abgehoben und dem Fördermittel 9 zugeführt.

Anschließend erfolgt dann eine Rückdrehung der Drehablagen 6 in diejenige Position in der die Kammelemente 7 senkrecht zur Zeichenebene verlaufen, so daß beim nächsten Passieren der Zuführstrecke 3 auf den Drehablagen wiederum ein zu verdrehendes Produkt abgelegt werden kann.

Die in Figur 1 gezeigte Vorrichtung kann auch in der Weise betrieben werden, daß keine Drehung der Produkte erfolgt.

In diesem Fall werden die Förderbänder der Zuführstrecke 3 und der Wegführstrecke 8 ausgehängt und die dem Förderband 1 zugewandte Antriebsrolle 3' mittels eines in Figur 1 gestrichelt dargestellten Förderbandes 22 mit der dem Fördermittel 9 zugewandten Antriebsrolle 8' der Wegführstrecke 8 verbunden. Die Produkte laufen dann nicht mehr über die Drehablagen sondern über das Förderband 22, wo sie keine Drehung erfahren. Bei dieser Betriebsweise können die Drehablagen 6 entweder weiter in Umlaufrichtung betrieben oder auch stillgesetzt bzw. ausgehängt werden.

Die in Fig. 1 dargestellte Vorrichtung kann so betrieben werden, daß jeweils zum Zeitpunkt der Produktübergabe eine Synchronisation zwischen Zuführstrecke 3 und Mitnahmeelement 4 und/oder zwischen Mitnahmeelement 4 und Wegführstrecke 8 und/oder zwischen Wegführstrecke 8 und Fördermittel 9 gegeben ist. Der Ablauf dieser Synchronisationsprozesse wurde eingangs bereits ausführlich erläutert.

Für die genannten Synchronisationsprozesse ist es von Bedeutung, daß an der Zuführstrecke 3 oder aber auch am Förderband 1 in Fig. 1 nicht dargestellte Mittel zur Detektion der angelieferten Produkte 2 vorgesehen sind, da diese Mittel die nötigen Signale für einen oder mehrere der genannten Synchronisationsprozesse zur Verfügung stellen.

Figur 2 zeigt eine schematische Draufsicht auf eine entsprechend Figur 1 ausgebildete Vorrichtung, wobei hier beispielhaft drei Positionen A, B und C der Drehablagen 6 dargestellt sind.

Die Drehablagen 6 bestehen aus parallel verlaufenden Kammelementen 7, die zwischen sich jeweils Zwischenräume 14 ausbilden und über einen Verbindungssteg 13 miteinander verbunden sind. Die Länge der Kammelemente nimmt nach außen hin ab, was beispielsweise dann von Vorteil ist, wenn einzelne Drehablagen 6 relativ dicht beieinander angeordnet sind und ein Verdrehen einer Drehablage 6 ermöglicht werden soll, ohne daß benachbarte Drehablagen berührt bzw. beschädigt werden.

Bei der in der Übernahmeposition A dargestellten Drehablage 6 verlaufen die Kammelemente 7 senkrecht zur Förderrichtung der Zuführstrecke 3. Bei der nachfolgenden Bewegung der Drehablage 6 in die näher an der Wegführstrecke 8 befindliche Position B erfolgt eine Verdrehung um eine senkrecht zur Förderebene bzw. zur Zeichenebene der Figur 2 verlaufende Achse, wobei die erwünschte 90°-Verdrehung in Richtung der Pfeile D in Position B bereits zur Hälfte vollzogen ist.

Während der weiteren Förderbewegung der Drehablage 6 in Richtung der Wegführstrecke 8 erfolgt schließlich die vollständige Verdrehung der Drehablage 6 entsprechend Position C, in der die Kammelemente 7 parallel zur Förderrichtung verlaufen.

In dieser, der Abgabeposition entsprechenden Position C greifen Fingerbänder 15 der Wegführstrecke 8 in die zwischen den Kammelementen 7 ausgebildeten Zwischenräume 14 ein. Der gegenseitige Abstand von benachbarten Kammelementen 7 bzw. benachbarten Fingerbändern 15 muß dabei aneinander angepaßt sein.

Durch den in Förderrichtung erfolgenden Antrieb der Fingerbänder 15 wird das in Position C auf der Drehablage 6 befindliche (in Figur 2 nicht dargestellte) Produkt von der Drehablage 6 abgehoben und über die Wegführstrecke 8 dem Fördermittel 9 zugeführt.

Um ein problemloses Vorbeilaufen der Drehablagen 6 an der Wegführstrecke 3 unter Eingriff von Fingerbändern 15 und Zwischenräumen 14 zu ermöglichen, muß der Verbindungssteg 13 so angeordnet sein, daß er unterhalb der Umlenkwalze 16 der Fingerbänder 15 an dieser vorbeiläuft.

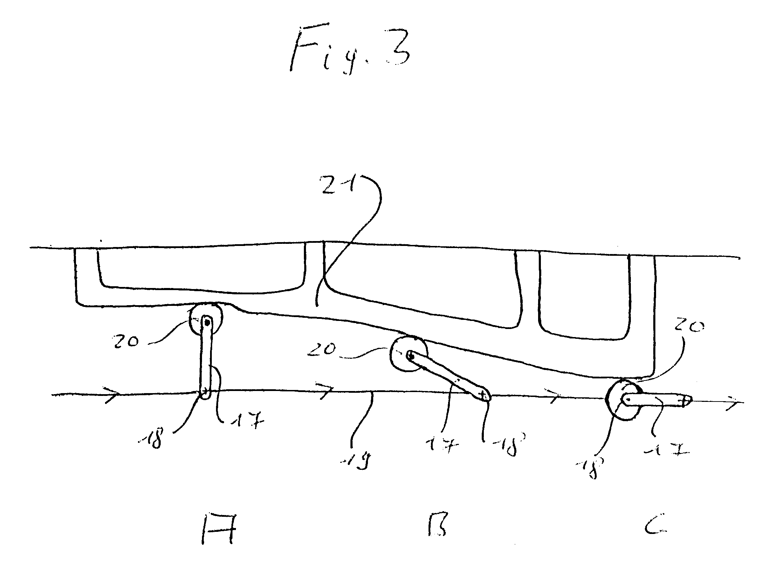

Die Verdrehung der Drehablagen 6 kann mechanisch beispielsweise dadurch bewerkstelligt werden, daß die Drehablagen 6 jeweils einen zwischen Wegführ- und Zuführstrecke entlang einer Führungskulisse geführten Anlenkhebel aufweisen, wie dies in Figur 3 schematisch dargestellt ist.

In Figur 3 ist ein Anlenkhebel 17 in drei verschiedenen Position A, B und C gezeigt, wobei diese Positionen den in Figur 2 dargestellten Positionen entsprechen.

Der Anlenkhebel 17 ist fest mit einer aus Gründen der Übersichtlichkeit in Figur 3 nicht dargestellten Drehablage gekoppelt und erstreckt sich parallel zur Förderebene der Drehablagen.

Der Mittelpunkt 18 (siehe auch Position B der Figur 2) der Drehablagen bewegt sich in Pfeilrichtung entlang einer Förderstrecke 19.

An dem dem Mittelpunkt 18 der Drehablagen abgewandten Ende des Anlenkhebels 17 ist eine Anlenkrolle 20 angebracht, die um eine senkrecht zur Förderebene verlaufende Achse drehbar ist.

Die Anlenkrolle 20 läuft während der Bewegung der Drehablage zwischen der Zuführ- und der Wegführstrecke an einer Führungskulisse 21 entlang, welche mit zunehmendem Abstand von der Zuführstrecke näher an die durch den Mittelpunkt 18 der Drehablagen beschriebene Bahn 19 heranreicht. Durch den sich auf diese Weise verringerten Abstand zwischen dieser Bahn und der Führungskulisse 21 sowie durch die Schwenkbarkeit der Drehablagen um eine durch deren Mittelpunkt 18 senkrecht zur Förderebene verlaufende Achse wird der Anlenkhebel 17 aus der Position A kontinuierlich in die Position B und anschließend in die Position C verschwenkt, wobei der Anlenkhebel 17 dabei insgesamt eine Drehung um 90° um den Mittelpunkt 18 der Drehablagen erfährt. In gleicher Weise wie der Anlenkhebel 17 führt auch die mit ihm gekoppelte Drehablage eine entsprechende 90°-Drehung aus.

Das in Figur 3 veranschaulichte Prinzip ist lediglich schematisch dargestellt. In der Praxis können pro Drehablage beispielsweise auch zwei Anlenkhebel mit jeweils einer Anlenkrolle vorgesehen werden, die an unterschiedlichen Führungskulissen entlanglaufen, wobei die Anlenkhebel mit den ihnen jeweils zugeordneten Führungskulissen nacheinander oder abwechselnd die gewünschte Drehbewegung der Drehablagen bewirken.

Bei einer bevorzugten Ausführungsform der Erfindung wird die Führungskulisse so ausgeformt, daß die Drehbewegung der Drehablagen mit geringen Beschleunigungskräften erfolgt, so daß die auf den Drehablagen befindlichen Produkte nicht verrutschen können. Insbesondere wird dabei die mit den Anlenkhebeln zusammenwirkende Führungskulisse so ausgeformt, daß die Drehbewegung der Drehablagen nach dem Verlassen der Übernahmeposition im Bereich der Zuführstrecke beschleunigt und anschließend vor dem Erreichen der Abgabeposition im Bereich der Wegführstrecke verlangsamt wird.

Von Vorteil ist es, wenn Rückstellmittel zum nach der Abgabe der verdrehten Produkte erfolgenden Verdrehen der Drehablagen aus der Abgabe- in die Übernahmeposition vorgesehen sind. Diese Rückstellmittel können beispielsweise als Federmittel ausgebildet sein, die einer Verdrehung der Drehablagen aus der Übernahme- in die Abgabeposition entgegenwirken und somit nach der Abgabe eines Produkts eine Rückstellung der Drehablage auslösen.

Bei Vorsehung der erwähnten Rückstellmittel wird bevorzugt zwischen Wegführ- und Zuführstrecke im unteren Bereich der Umlaufbahn der Drehablagen eine mit den Anlenkhebeln der Drehablagen zusammenwirkende Rückstellkulisse angeordnet.

Das Verdrehen der Drehablagen aus der Abgabe- in die Übernahmeposition kann schneller erfolgen als das Verdrehen der Drehablagen aus der Übernahmeposition in die Abgabeposition, da in ersterem Fall keine Produkte auf den Drehablagen gefördert werden und deshalb durch hohe Beschleunigungskräfte auch kein Verrutschen derselben stattfinden kann. Die Steigung der Rückstellkulisse kann daher größer sein als die Steigung der Führungskulisse zum Verdrehen der Drehablagen aus der Übernahme- in die Abgabeposition.

Die Verdrehung der Drehablagen muß erfindungsgemäß nicht durch das beschriebene Prinzip des Zusammenwirkens von Führungskulissen und Anlenkhebeln erfolgen; es lassen sich auch beliebig andere Antriebe zur Bewirkung der Drehbewegung einsetzen.

Die Länge der Förderstrecken der Drehablagen zwischen der Zuführ- und der Wegführstrecke bzw. die Länge der Führungskulisse ist abhängig von der gewünschten Fördergeschwindigkeit der Drehablagen, da die Drehung aufgrund der dadurch auf das Produkt bzw. den Produktstapel ausgeübten Beschleunigungskräfte nicht beliebig schnell erfolgen darf. Bei gleichzeitig mit einer erhöhten Fördergeschwindigkeit der Drehablagen verlängerten Förderstrecke der Drehablagen bleibt jedoch die für die Drehung zur Verfügung stehende Zeit gleich, weshalb - wie erwähnt - eine entsprechend hohe gewünschte Fördergeschwindigkeit der Drehablagen durch eine entsprechend lange Förderstrecke der Drehablagen ausgeglichen werden kann.

## Patentansprüche

1. Vorrichtung zum Verdrehen von in einem Förderprozess befindlichen Produkten (2, 2', 10, 12) oder Produktstapeln um eine im wesentlichen senkrecht zur Förderebene verlaufende Achse,
**gekennzeichnet** durch
zwischen einer Zuführstrecke (3) und einer Wegführstrecke (8) umlaufende, kammartig ausgebildete Drehablagen (6), die von Antriebsmitteln (17) zu deren während der Bewegung zwischen Zuführ- und Wegführstrecke (3, 8) erfolgenden Verdrehung aus einer Übernahme- (A) in eine Abgabeposition (C) beaufschlagt sind, wobei
die Kammelemente (7) der Drehablagen (6) in der Abgabeposition (C) in Förderrichtung ausgerichtet und in Eingriff mit in Förderrichtung verlaufenden Fingerbändern (15) der Wegführstrecke (8) bringbar sind, und
im Bereich der Zuführstrecke (3) die Fördergeschwindigkeit bzw. den Fördertakt der Drehablagen (6) steuernde Mittel zur Detektion von zu verdrehenden und die Zuführstrecke passierenden Produkten (2, 2') bzw. Produktstapeln vorgesehen sind.

2. Vorrichtung nach Anspruch 1,
dadurch **gekennzeichnet,**
daß die Fördergeschwindigkeit der Drehablagen (6) oder die Fördergeschwindigkeit der Zuführstrecke (3) variabel und in Abhängigkeit von über die Zuführstrecke (3) angelieferten Produkten (2, 2') bzw. Produktstapeln steuerbar ist und/oder daß die Fördergeschwindigkeiten der Zuführstrecke (3) und der Drehablagen (6) zumindest während der Übergabe eines Produktes (2, 2') bzw. Produktstapels von der Zuführstrecke (3) an eine Drehablage (6) synchronisiert sind.

3. Vorrichtung nach einem der vorhergehenden Ansprüche,
dadurch **gekennzeichnet,**
daß die Zuführstrecke (3) mit konstanter Geschwindigkeit betrieben ist, und/oder daß die Zuführstrecke (3) mit zwei unterschiedlichen, jeweils konstanten Geschwindigkeiten betreibbar ist und/oder daß die Zuführstrecke (3) kontinuierlich oder mit insbesondere variablem Takt betrieben ist.

4. Vorrichtung nach einem der vorhergehenden Ansprüche,
dadurch **gekennzeichnet,**
daß die Fördergeschwindigkeiten der Fingerbänder (15) und der Drehablagen (6) zumindest während der Übergabe eines Produktes (2, 2') bzw. Produktstapels von einer Drehablage (6) an die Fingerbänder (15) synchronisiert sind, und/oder daß die Fördergeschwindigkeiten der Fingerbänder (15) und der Drehablagen (6) ständig synchronisiert sind, und/oder daß die Fördergeschwindigkeiten der Fingerbänder (15) und der Drehablagen (6) konstant und gleich groß sind.

5. Vorrichtung nach einem der vorhergehenden Ansprüche,
dadurch **gekennzeichnet,**
daß der Abstand zwischen dem den Drehablagen (6) zugewandten Ende der Zuführstrecke (3) und dem den Drehablagen (6) abgewandten Ende der Fingerbänder (15) zumindest im wesentlichen einem ganzzahligen Vielfachen des Abstandes der Drehachsen zweier benachbarter Drehablagen (6) entspricht.

6. Vorrichtung nach einem der vorhergehenden Ansprüche,
dadurch **gekennzeichnet,**
daß die Drehablagen (6) mit einem um zwei Umlenk- bzw. Antriebsrollen (5) geführten umlaufenden Mitnahmeelement (4), insbesondere einem Zahnriemen verbunden sind, wobei insbesondere die Drehablagen (6) mit dem Mitnahmeelement (4) lösbar verbunden sind, und/oder daß der Verdrehwinkel 90° beträgt, wobei insbesondere die Kammelemente (7) in der Übernahmeposition (A) senkrecht zur Förderrichtung verlaufen.

7. Vorrichtung nach einem der vorhergehenden Ansprüche,
dadurch **gekennzeichnet,**
daß die Drehablagen (6) jeweils einen zwischen Wegführ- und Zuführstrecke (3, 8) entlang einer Führungskulisse (21) geführten Anlenkhebel (17) aufweisen, wobei insbesondere die mit den Anlenkhebeln (17) zusammenwirkende Führungskulisse (21) so ausgeformt ist, daß die Drehbewegung der Drehablagen (6) mit geringen Beschleunigungskräften erfolgt, wobei insbesondere die mit den Anlenkhebeln (17) zusammenwirkende Führungskulisse (21) so ausgeformt ist, daß die Drehbewegung der Drehablagen (6) nach dem Verlassen der Übernahmeposition (A) beschleunigt und anschließend vor dem Erreichen der Abgabeposition (C) verlangsamt wird.

8. Vorrichtung nach einem der vorhergehenden Ansprüche,
dadurch **gekennzeichnet,**
daß Rückstellmittel zum Verdrehen der Drehablagen aus der Abgabe- in die Übernahmeposition vorgesehen sind.

9. Vorrichtung nach einem der vorhergehenden Ansprüche,
dadurch **gekennzeichnet,**
daß an jeder Drehablage der Verdrehung derselben aus der Übernahme- in die Abgabeposition entgegenwirkende, als Federmittel ausgebildete Rückstellmittel vorgesehen sind, wobei insbesondere zwischen Wegführ- und Zuführstrecke im Bereich der Umlaufbahn der Drehablagen eine mit den Anlenkhebeln zusammenwirkende Rückstellkulisse vorgesehen ist.

10. Vorrichtung nach einem der vorhergehenden Ansprüche,
dadurch **gekennzeichnet,**
daß die Zuführstrecke (3) in deren Endbereich als gegenüber der horizontalen Förderebene der Drehablagen (6) geringfügig geneigtes Förderband ausgebildet ist, und/oder daß die horizontale Förderebene der Drehablagen (6) und der Fingerbänder (15) gegeneinander geringfügig geneigt sind, oder daß die Zuführstrecke (3) in deren Endbereich in der horizontalen Förderebene der Drehablagen (6) verläuft, und/oder daß die Förderebene der Drehablagen (6) in der Förderebene der Fingerbänder (15) verläuft.
